# FASCICULE DE BREVET EUROPEEN

(11) **EP 3 005 625 B1**
(45) Date de publication et mention de la délivrance du brevet: **05.07.2017**
(21) Numéro de dépôt: 14726359.4
(22) Date de dépôt: 23.05.2014
(51) Int. Cl.: H04L 12/46, H04L 12/18, H04L 12/931

(54) **COMPOSANT ET PROCEDE DE GESTION DE COMMUNICATION**
KOMMUNIKATIONSVERWALTUNGS -BAUTEIL UND -VERFAHREN
COMMUNICATION MANAGEMENT COMPONENT AND METHOD

(30) Priorité: 30.05.2013 FR 1354949
(43) Date de publication de la demande: 13.04.2016
(73) Titulaire: Safran Electronics & Defense, 92100 Boulogne-Billancourt (FR)
(72) Inventeur: VANDENBAVIERE, Yann, 92100 Boulogne-Billancourt (FR)
(74) Mandataire: Lavaud, Thomas
(86) Numéro de dépôt international: PCT/EP2014/060744
(87) Numéro de publication internationale: WO 2014/191330

(56) Documents cités:
- WO-A1-2010/071623
- US-A1- 2002 039 366

## Description

L'invention concerne un composant et un procédé de gestion de communication destinés à organiser des échanges de données entre des équipements communicants d'un réseau de type Ethernet.

### ARRIERE PLAN DE L'INVENTION

Les architectures des systèmes avioniques modernes doivent répondre à des exigences de conception particulièrement contraignantes, notamment en matière de performance, de sécurité et de fiabilité des systèmes, mais aussi en matière de masse des différents équipements composant ces systèmes (calculateurs, concentrateurs de données, capteurs, etc.) et des câbles connectant entre eux ces équipements.

Ces différentes exigences « techniques » ont souvent tendance à orienter les concepteurs d'architectures vers des solutions opposées ; elles sont en outre elles-mêmes susceptibles d'entrer en conflit avec des objectifs en terme de coûts (coûts de développement, coûts récurrents de fabrication des équipements, etc.).

Le choix des bus de données et des protocoles de communication utilisés dans les architectures pour supporter les communications entre les différents équipements est typiquement soumis à ce type de problématiques. Ainsi, dans un système de commandes de vol électriques présentant une architecture redondante au sein de laquelle sont intégrés de nombreux équipements, il est fondamental, d'une part, d'assurer des durées de transmission de données les plus courtes possibles et, d'autre part, de réduire au maximum les liens physiques entre les équipements de l'architecture, tout en maintenant des coûts raisonnables de développement et de fabrication.

Les différentes solutions disponibles présentent chacune des désavantages bien connus : lenteur des communications et masse des câbles pour les normes ARINC 429 et MIL-STD-1553, coût de mise en oeuvre d'un réseau AFDX, etc. Le document US2002/039366 présente un composant selon le préambule de la revendication 1.

### OBJET DE L'INVENTION

L'invention a pour objet un composant et un procédé de gestion de communication destinés à organiser des échanges de données de manière simple, sûre, rapide, et peu coûteuse.

### RESUME DE L'INVENTION

En vue de la réalisation de ce but, on propose un composant de gestion de communication destiné à organiser des échanges de données entre des équipements communicants d'un réseau de type Ethernet, le composant de gestion comportant :
- des moyens d'interface pour connecter le composant de gestion aux équipements communicants ;
- des moyens de distribution adaptés à acquérir et à distribuer via les moyens d'interface des données entrantes provenant de chaque équipement communicant vers les autres équipements communicants ;
- des moyens de traitement agencés pour définir au moins un groupe d'émission et un groupe de réception constitués par des équipements communicants, et pour piloter les moyens de distribution de manière à ce que les données entrantes provenant d'un équipement particulier dit équipement émetteur appartenant au groupe d'émission soient distribuées aux équipements du groupe de réception, chacun des équipements communicants du groupe d'émission devenant tour à tour équipement émetteur selon une première séquence prédéfinie répétée cycliquement.

Le composant de gestion ainsi obtenu est simple et peu coûteux. Il centralise les échanges de données et donc, d'une part, réduit des longueurs de câbles nécessaires à ces échanges, et d'autre part, diminue des temps de transmission des échanges de données. De plus, en organisant de manière séquencée et cyclique ces échanges de données, on diminue encore lesdits temps de transmission.

On propose de plus un procédé de gestion de communication destiné à organiser des échanges de données entre des équipements communicants d'un réseau de type Ethernet, le procédé de gestion comportant une étape initiale au cours de laquelle au moins un groupe d'émission et un groupe de réception formés d'équipements communicants sont définis, le procédé comportant des étapes de distribution associées chacune à un équipement particulier du groupe d'émission dit équipement émetteur, au cours desquelles les données entrantes provenant de l'équipement émetteur sont distribuées aux équipements communicants du groupe de réception à l'exception de l'équipement émetteur, chacun des équipements communicants du groupe d'émission devenant tour à tour équipement émetteur selon une première séquence prédéfinie répétée cycliquement.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- les figures 1a à 1d représentent schématiquement un composant de gestion de communication de l'invention connecté à des équipements communicants ;
- la figure 2 représente schématiquement des étapes de distribution du procédé de gestion de communication de l'invention.

### DESCRIPTION DETAILLEE DE L'INVENTION

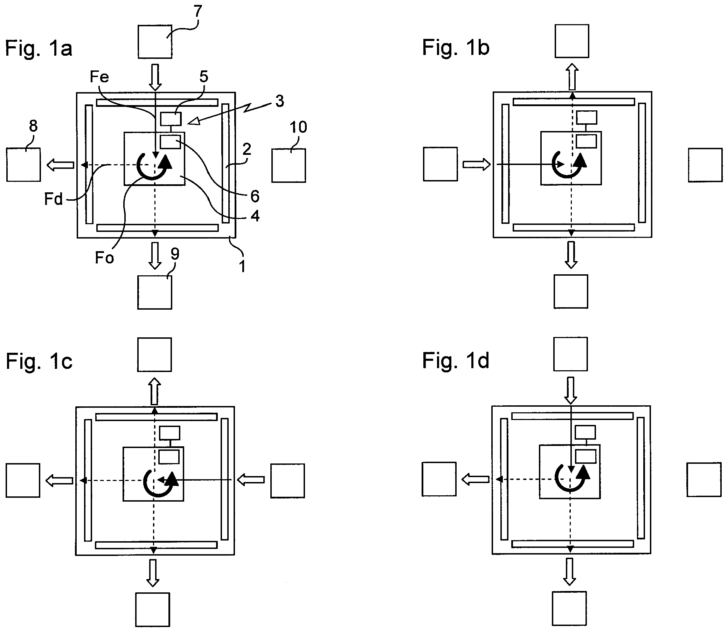

Le composant de gestion de communication 1, visible sur les figures 1a, 1b, 1c, 1d, est ici utilisé dans un système de commandes de vol électriques d'un aéronef.

Le composant de gestion 1 comporte des moyens d'interface 2, comprenant notamment des connecteurs permettant de connecter divers câbles au composant de gestion, des moyens de distribution 3, comprenant ici un circuit logique 4 de type FPGA (pour « Field-Programmable Gate Array », que l'on peut traduire par « réseau de portes programmables ») et des moyens de mémoire 5 connectés au FPGA 4, ainsi que des moyens de traitement 6, en l'occurrence ici des éléments de programmation du FPGA permettant de piloter le fonctionnement de celui-ci.

Le composant de gestion 1 est relié, via des câbles de connexion connectés aux connecteurs des moyens d'interface 2, à un certain nombre d'équipements communicants appartenant eux aussi au système de commandes de vol, en l'occurrence un premier calculateur 7, un deuxième calculateur 8, un concentrateur de données 9 et un capteur 10. Les équipements communicants 7, 8, 9, 10 forment ici un réseau Ethernet, c'est à dire qu'ils échangent entre eux des données grâce à un protocole Ethernet, cet échange de données ayant un débit de l'ordre de 100 mégabits par seconde.

Le premier calculateur 7 et le deuxième calculateur 8 sont tous deux agencés pour émettre et recevoir des données via le composant de gestion 1, à destination et en provenance des autres équipements communicants. Le concentrateur de données 9 est ici uniquement agencé pour recevoir des données provenant des autres équipements communicants via le composant de gestion 1. Le concentrateur de données 9 peut éventuellement par ailleurs être adapté à transmettre des données, mais ces données ne sont pas transmises via le composant de gestion 1, et sont destinées à des équipements non évoqués ici. Le capteur 10, quant à lui, est adapté uniquement à émettre des données résultant de mesures qu'il a effectuées.

Le FPGA 4 du composant de gestion 1 est connecté à l'ensemble des équipements communicants via les moyens d'interface 2 du composant de gestion 1 et les câbles de connexion. Le FPGA 4 peut ainsi acquérir des données entrantes fournies par les équipements communicants, éventuellement stocker ces données entrantes dans les moyens de mémoire 5, et les redistribuer aux autres équipements.

Les éléments de programmation 6 sont agencés pour définir un groupe d'émission et un groupe de réception constitués chacun de certains des équipements communicants 7, 8, 9, 10 : le groupe d'émission est formé par les équipements communicants 7, 8, 10 adaptés à émettre des données via le composant de gestion 1, et le groupe de réception est formé par les équipements communicants 7, 8, 9 adaptés à recevoir des données via le composant de gestion 1. Le groupe d'émission est donc constitué par l'ensemble des équipements communicants à l'exception du concentrateur de données 9. Le groupe de réception est constitué de l'ensemble des équipements communicants à l'exception du capteur 10. On note ici que la définition des groupes peut être réalisée soit au moment de la programmation du FPGA 4, soit dynamiquement (auquel cas les éléments de programmation 6 sont par exemple communiqués au FPGA via une mémoire vive par un microcontrôleur adapté à détecter la présence et le type des équipements communicants).

On décrit maintenant le fonctionnement de ce composant de gestion.

Les éléments de programmation 6 pilotent le FPGA 4 de manière à que les données entrantes provenant d'un équipement particulier dit « équipement émetteur » appartenant au groupe d'émission soient distribuées à tous les équipements du groupe de réception, à l'exception de l'équipement émetteur, selon une première séquence prédéfinie répétée cycliquement. Cette première séquence est une suite ordonnée dans laquelle chacun des équipements communicants du groupe d'émission devient tour à tour équipement émetteur.

En référence à la figure 1a, sur laquelle la flèche en trait continu fin Fe représente le cheminement des données entrantes et les flèches en trait pointillé fin Fd représentent la distribution des données entrantes aux équipements communicants du groupe de réception, les données entrantes provenant du premier calculateur 7 sont tout d'abord acquises par le composant de gestion 1 puis transmises de manière successive aux équipements communications du groupe de réception à l'exception du premier calculateur, c'est-à-dire au deuxième calculateur 8 puis au concentrateur de données 9. Puis, en référence à la figure 1b, les données entrantes provenant du deuxième calculateur 8 sont transmises de manière successive au concentrateur de données 9 puis au premier calculateur 7. Puis, en référence à la figure 1c, les données entrantes provenant du capteur 10 sont transmises de manière successive au premier calculateur 7, au deuxième calculateur 8, et au concentrateur de données 9. Enfin, en référence à la figure 1d, les données entrantes provenant du premier calculateur 7 sont à nouveau transmises au deuxième calculateur 8, puis au concentrateur de données 9 : la première séquence se répète cycliquement. Les références des différents éléments des figures 1b à 1d correspondent bien sûr aux références de la figure 1a pour les mêmes éléments.

Les données entrantes sont ici acquises par le composant de gestion 1 selon une méthode de type « FIFO » (« First In, First Out », que l'on peut traduire par « premier arrivé, premier sorti ») : pour un équipement émetteur particulier, chacune des données entrantes est acquises, éventuellement mémorisée par les moyens de mémoire 6, puis redistribuée vers les équipements du groupe de réception de sorte que la première donnée arrivée est la première donnée distribuée.

Avantageusement, les données entrantes provenant de chacun des équipements émetteurs sont distribuées aux équipements communicants du groupe de réception (à l'exception de l'équipement émetteur) au cours d'opérations d'émission successives de durée prédéterminée, une opération d'émission correspondant à la distribution des données entrantes provenant de l'équipement émetteur vers l'un des équipements communicants du groupe de réception.

On note ici que les opérations d'émission sont réalisées selon une deuxième séquence répétée cycliquement. En l'occurrence, les données transmises par un équipement émetteur quelconque sont transmises dans l'ordre indiqué par la flèche en trait épais Fo.

Avantageusement, la première opération d'émission d'un équipement émetteur débute à la fin de la première opération d'émission de l'équipement émetteur le précédant dans la première séquence.

Ainsi, chacun des équipements communicants du groupe d'émission émet tour à tour ses données à un instant prédéfinie et pendant une durée prédéterminée : on simplifie ainsi les échanges de données et le composant de gestion lui-même, et on réalise des échanges de données rapides et sûrs.

On décrit maintenant le procédé de gestion de communication de l'invention, qui ici est mis en oeuvre par le composant de gestion.

Le procédé de gestion comporte une étape initiale, au cours de laquelle le groupe d'émission et le groupe de réception sont définis, le groupe d'émission étant ici composé du premier calculateur 7, du deuxième calculateurs 8 et du capteur 10, et le groupe de réception étant ici composé du premier calculateur 7, du deuxième calculateur 8 et du concentrateur de données 9.

Le procédé de gestion comporte de plus des opérations d'acquisition Oa7, Oa8, Oa10, associées à chacun des équipements du groupe d'émission, c'est-à-dire respectivement au premier calculateur 7, au deuxième calculateur 8, au capteur 10, chaque opération d'acquisition Oa7, Oa8, Oa10 consistant ici à acquérir les données entrantes provenant de l'équipement correspondant du groupe d'émission.

Le procédé de gestion comporte en outre des étapes de distribution Ed7, Ed8, Ed10, associées chacune à un équipement particulier du groupe d'émission dit équipement émetteur, au cours desquelles les données entrantes provenant de l'équipement émetteur sont distribuées aux équipements communicants du groupe de réception, chacun des équipements communicants du groupe d'émission devenant tour à tour équipement émetteur selon une première séquence prédéfinie répétée cycliquement.

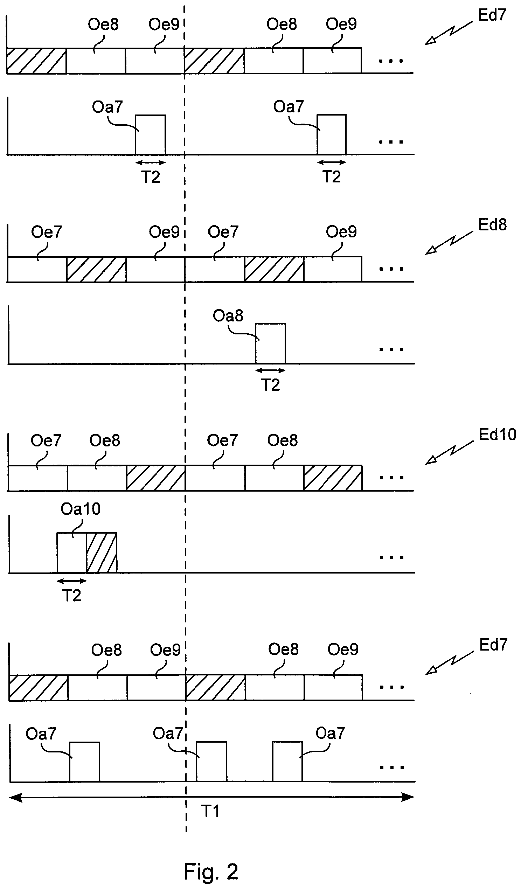

Les étapes de distribution mises en oeuvre pendant une certaine durée T1, ainsi que les opérations d'acquisition sont visibles à la figure 2. Chacune des étapes de distribution Ed7, Ed8, Ed10 comporte des opérations d'émission successives de durée prédéterminée Oe7, Oe8, Oe9, une opération d'émission correspondant à la distribution des données entrantes provenant de l'équipement émetteur vers l'un des équipements communicants du groupe de réception. L'opération Oe7 correspond en l'occurrence à une distribution de données vers le premier calculateur 7, l'opération Oe8 vers le deuxième calculateur 8, l'opération Oe9 vers le concentrateur de données 9. On voit bien ici que les opérations d'émission sont réalisées selon la deuxième séquence répétée cycliquement : l'opération Oe8 succède systématiquement à l'opération Oe7, l'opération Oe9 à l'opération Oe8, l'opération Oe7 à l'opération Oe9.

La première opération d'émission d'une étape de distribution débute à la fin de la première opération d'émission de l'étape de distribution précédente. On voit sur la figure 2 que l'étape Ed7 succède à l'étape Ed10 : la première séquence prédéfinie est répétée cycliquement.

On remarque que dans la durée T1 représenté sur la figure 2, les opérations d'acquisition sont réalisées à des instants non prédéterminés, au moment où les données entrantes parviennent au composant de gestion 1. Bien sûr, lors d'une étape de distribution correspondant à un équipement communicant émetteur, seules les données reçues par le composant de gestion 1 lors de l'étape de distribution précédente sont transmises aux équipements communicants du groupe de réception. Enfin, il est possible d'allouer des durées T2 prédéterminées aux opérations d'acquisition : on remarque par exemple que l'opération d'acquisition Oa10 associée au capteur 10 a une durée supérieure à la durée prédéterminée : les données supplémentaires, correspondant à la partie hachurée de l'opération d'acquisition, ne sont pas acquises par le composant de gestion. Ces durées T2 peuvent éventuellement être fixes. Ces durées T2 peuvent éventuellement être identiques pour chacun des équipements du groupe d'émission, ou bien être de durée différente selon les équipements. Avantageusement, ces durées T2, lorsqu'elles sont différentes, sont toutefois multiples d'un temps élémentaire, ce qui permet de simplifier le procédé.

L'invention n'est pas limitée aux modes de réalisation particuliers qui viennent d'être décrits, mais, bien au contraire, couvre toute variante entrant dans le cadre de l'invention telle que définie par les revendications.

Il est notamment possible que les données entrantes provenant de chacun des équipements du groupe d'émission soient distribuées aux équipements communicants du groupe de réception, lors de chacune des étapes de distribution, au cours d'une seule opération d'émission commune à tous les équipements communicants du groupe de réception. Il est aussi possible que ces données soient distribuées à plusieurs équipements communicants du groupe de réception au cours d'une seule opération d'émission.

Les moyens de distribution peuvent comporter un autre type de circuit logique, par exemple un ASIC, ou bien un autre composant pouvant réaliser des opérations logiques, par exemple un microcontrôleur.

Le protocole de communication utilisé peut être un protocole autre que le protocole Ethernet (à condition tout de même qu'il s'agisse d'un protocole apte à assurer des communications sûres et rapide, telles celles mises en oeuvre dans des applications avioniques), et le débit des échanges de données peut être différent de 100 mégabits par seconde.

Il est possible de prévoir qu'à chaque équipement émetteur soit associé un groupe de réception particulier, par exemple : l'équipement 7 n'émet des données que vers les équipements 8 et 9, l'équipement 8 n'émet des données que vers l'équipement 9, l'équipement 9 n'émet des données que vers l'équipement 7 et l'équipement 10 émet des données vers tous les autres équipements. Un groupe peut donc ne comprendre qu'un seul équipement. A l'inverse, tous les équipements pourraient être amenés à émettre des données vers tous les autres équipements : dans ce cas, il est prévu au départ que tous les équipements appartiennent au groupe d'émission et au groupe de réception.

Bien que l'on ait choisi d'illustrer l'invention avec quatre équipements connectés au composant de gestion, il est bien sûr possible de connecter audit composant de gestion un nombre différent d'équipements.

## Revendications

1. Composant de gestion de communication (1) destiné à organiser des échanges de données entre des équipements communicants (7, 8, 9, 10) d'un réseau de type Ethernet, le composant de gestion (1) comportant :
- des moyens d'interface (2) pour connecter le composant de gestion (1) aux équipements communicants ;
- des moyens de distribution (3) adaptés à acquérir et à distribuer via les moyens d'interface (2) des données entrantes provenant de chaque équipement communicant vers les autres équipements communicants ;le composant de gestion étant **caractérisé en ce qu'**il comprend également:
- des moyens de traitement (6) agencés pour définir au moins un groupe d'émission et un groupe de réception constitués par des équipements communicants, et pour piloter les moyens de distribution de manière à ce que les données entrantes provenant d'un équipement particulier dit équipement émetteur appartenant au groupe d'émission soient distribuées aux équipements du groupe de réception à l'exception de l'équipement émetteur, chacun des équipements communicants du groupe d'émission devenant tour à tour équipement émetteur selon une première séquence prédéfinie répétée cycliquement.

2. Composant de gestion de communication selon la revendication 1, dans lequel les moyens de distribution sont adaptés pour que les données entrantes provenant d'un équipement émetteur soient distribuées aux équipements communicants du groupe de réception au cours d'une ou de plusieurs opérations d'émission (Oe7, Oe8, Oe9) successives de durée prédéterminée, une opération d'émission correspondant à la distribution des données entrantes provenant de l'équipement émetteur vers au moins un des équipements communicants du groupe de réception.

3. Composant de gestion de communication selon la revendication 2, dans lequel les opérations d'émission sont réalisées selon une deuxième séquence prédéfinie répétée cycliquement.

4. Composant de gestion de communication selon l'une des revendications 2 à 3, dans lequel les moyens de distribution sont adaptés pour que la première opération d'émission d'un équipement émetteur débute à la fin de la première opération d'émission de l'équipement émetteur le précédant dans la première séquence.

5. Composant de gestion de communication selon l'une des revendications précédentes, dans lequel les moyens de traitement sont adaptés pour que le groupe d'émission ne comprenne pas au moins un équipement communicant qui n'est pas adapté à générer des données vers d'autres équipements communicants via le composant de gestion.

6. Composant de gestion de communication selon l'une des revendications précédentes, dans lequel les moyens de traitement sont adaptés pour que le groupe de réception ne comprenne pas au moins un équipement communicant qui n'est pas adapté à recevoir des données provenant d'autres équipements communicants via le composant de gestion (1).

7. Composant de gestion de communication selon l'une des revendications précédentes, dans lequel les moyens de distribution sont adaptés pour que les données entrantes soient acquises selon une méthode de type FIFO.

8. Composant de gestion de communication selon l'une des revendications précédentes, dans lequel les moyens de distribution sont adaptés pour débit des échanges de données de l'ordre de 100 mégabits par seconde.

9. Composant de gestion de communication selon l'une des revendications précédentes, dans lequel les moyens de distribution (3) comportent un circuit logique (4) de type FPGA ou ASIC.

10. Procédé de gestion de communication destiné à organiser des échanges de données entre des équipements communicants d'un réseau de type Ethernet, le procédé de gestion comportant une étape initiale au cours de laquelle au moins un groupe d'émission et un groupe de réception formés d'équipements communicants sont définis, le procédé comportant des étapes de distribution (Ed7, Ed8, Ed10) associées chacune à un équipement particulier du groupe d'émission dit équipement émetteur, au cours desquelles les données entrantes provenant de l'équipement émetteur sont distribuées aux équipements communicants du groupe de réception à l'exception de l'équipement émetteur, chacun des équipements communicants du groupe d'émission devenant tour à tour équipement émetteur selon une première séquence prédéfinie répétée cycliquement.

11. Procédé de gestion selon la revendication 10, dans lequel chaque étape de distribution comporte une ou plusieurs opérations d'émission (Oe7, Oe8, Oe9) successives de durée prédéterminée (T2), une opération d'émission correspondant à la distribution des données entrantes provenant de l'équipement émetteur vers au mois un équipement communicant du groupe de réception.

12. Procédé de gestion selon l'une des revendications 10 et 11, dans lequel la première opération d'émission d'une étape de distribution débute à la fin de la première opération d'émission de l'étape de distribution précédente.

13. Procédé de gestion selon l'une des revendications 10 à 12, dans lequel la durée prédéterminée (T2) est la même pour chacune des étapes de distribution associées à chaque équipement du groupe d'émission.

14. Procédé de gestion selon l'une des revendications 10 à 12, dans lequel la durée prédéterminée (T2) diffère pour au moins deux étapes de distribution associées à deux équipements différents du groupe d'émission, ladite durée prédéterminée étant multiple d'un même temps élémentaire.

## Patentansprüche

1. Kommunikationsverwaltungsbauteil (1), das dazu bestimmt ist, Daten-austausche zwischen kommunizierenden Geräten (7, 8, 9, 10) eines Ethernet-Netzwerkes zu organisieren, wobei das Verwaltungsbauteil (1) umfasst:
- Schnittstellenmittel (2) zum Verbinden des Verwaltungsbauteils (1) mit den kommunizierenden Geräten;
- Verteilungsmittel (3), die daran angepasst sind, ankommende Daten, die von jedem kommunizierenden Gerät kommen, über die Schnittstellenmittel (2) zu erfassen und sie über die Schnittstellenmittel (2) auf die anderen kommunizierenden Geräte zu verteilen;
wobei das Verwaltungsbauteil **dadurch gekennzeichnet ist, dass** es ferner umfasst:
- Verarbeitungsmittel (6), die so ausgebildet sind, dass sie mindestens eine Sendegruppe und eine Empfangsgruppe definieren, die aus kommunizierenden Geräten gebildet sind, und dass sie die Verteilungsmittel derart steuern, dass die ankommenden Daten, die von einem besonderen Gerät kommen, das als Sendergerät bezeichnet wird und das zur Sendegruppe gehört, auf die Geräte der Empfangsgruppe mit Ausnahme des Sendergeräts verteilt werden, wobei jedes der kommunizierenden Geräte der Sendegruppe nacheinander gemäß einer ersten vordefinierten Abfolge, die zyklisch wiederholt wird, zum Sendergerät wird.

2. Kommunikationsverwaltungsbauteil nach Anspruch 1, bei dem die Verteilungsmittel angepasst sind, damit die ankommenden Daten, die von einem Sendergerät kommen, während eines oder mehrerer aufeinanderfolgender Sendevorgänge (Oe7, Oe8, Oe9) vorbestimmter Dauer auf die kommunizierenden Geräte der Empfangsgruppe zu verteilen, wobei ein Sendevorgang der Verteilung der ankommenden Daten, die von dem Sendergerät kommen, auf mindestens eines der kommunizierenden Geräte der Empfangsgruppe entspricht.

3. Kommunikationsverwaltungsbauteil nach Anspruch 2, bei dem die Sendevorgänge gemäß einer zweiten vordefinierten Abfolge erfolgen, die zyklisch wiederholt wird.

4. Kommunikationsverwaltungsbauteil nach einem der Ansprüche 2 bis 3, bei dem die Verteilungsmittel angepasst sind, damit der erste Sendevorgang eines Sendergeräts am Ende des ersten Sendevorgangs des Sendergeräts beginnt, das ihm in der ersten Abfolge vorausgeht.

5. Kommunikationsverwaltungsbauteil nach einem der vorhergehenden Ansprüche, bei dem die Verarbeitungsmittel angepasst sind, damit die Sendegruppe nicht mindestens ein kommunizierendes Gerät umfasst, das nicht daran angepasst ist, Daten in Richtung der anderen kommunizierenden Geräte über das Verwaltungsbauteil zu erzeugen.

6. Kommunikationsverwaltungsbauteil nach einem der vorhergehenden Ansprüche, bei dem die Verarbeitungsmittel angepasst sind, damit die Empfangsgruppe nicht mindestens ein kommunizierendes Gerät umfasst, das nicht daran angepasst ist, Daten, die von anderen kommunizierenden Geräten kommen, über das Verwaltungsbauteil (1) zu empfangen.

7. Kommunikationsverwaltungsbauteil nach einem der vorhergehenden Ansprüche, bei dem die Verteilungsmittel angepasst sind, damit die ankommenden Daten gemäß einem Verfahren der Art FIFO erfasst werden.

8. Kommunikationsverwaltungsbauteil nach einem der vorhergehenden Ansprüche, bei dem die Verteilungsmittel an Datenaustauschraten in der Größenordnung von 100 Megabit pro Sekunde angepasst sind.

9. Kommunikationsverwaltungsbauteil nach einem der vorhergehenden Ansprüche, bei dem die Verteilungsmittel (3) eine logische Schaltung (4) der Art FPGA oder ASIC umfassen.

10. Kommunikationsverwaltungsverfahren, das dazu bestimmt ist, Datenaustausche zwischen kommunizierenden Geräten eines Netzwerkes der Art Ethernet zu organisieren, wobei das Verwaltungsverfahren einen initialen Schritt umfasst, während dessen mindestens eine Sendegruppe und eine Empfangsgruppe, die aus kommunizierenden Geräten gebildet sind, definiert werden, wobei das Verfahren Verteilungsschritte (Ed7, Ed8, Ed10) umfasst, die jeweils mit einem besonderen Gerät der Sendegruppe, bezeichnet als Sendergerät, verknüpft sind, und während denen die ankommenden Daten, die von dem Sendergerät kommen, auf die kommunizierenden Geräte der Empfangsgruppe mit Ausnahme des Sendergerätes verteilt werden, wobei jedes der kommunizierenden Geräte der Sendegruppe gemäß einer ersten vordefinierten Abfolge, die zyklisch wiederholt wird, der Reihe nach zum Sendergerät wird.

11. Verwaltungsverfahren nach Anspruch 10, bei dem jeder Verteilungsschritt einen oder mehrere aufeinanderfolgende Sendevorgänge (Oe7, Oe8, Oe9) mit vorgegebener Dauer (T2) umfasst, wobei ein Sendevorgang der Verteilung der ankommenden Daten, die von dem Sendergerät kommen, in Richtung mindestens eines kommunizierenden Gerätes der Empfangsgruppe entspricht.

12. Verwaltungsverfahren nach einem der Ansprüche 10 und 11, bei dem der erste Sendevorgang eines Verteilungsschrittes am Ende des ersten Sendevorgangs der vorhergehenden Verteilungsschrittes beginnt.

13. Verwaltungsverfahren nach einem der Ansprüche 10 bis 12, bei dem die vorgegebene Dauer (T2) für jeden der Verteilungsschritte, die mit jedem Gerät der Sendegruppe verknüpft sind, die gleiche ist.

14. Verwaltungsverfahren nach einem der Ansprüche 10 bis 12, bei dem sich die vorgegebene Dauer (T2) für mindestens zwei Verteilungsschritte, die mit zwei verschiedenen Geräten der Sendegruppe verknüpft sind, unterscheidet, wobei die vorgegebene Dauer ein Vielfaches einer gleichen Elementarzeit ist.

## Claims

1. A communication management component (1) for organizing data exchanges between communicating devices (7, 8, 9, 10) of an Ethernet type network, the management component (1) comprising:
• interface means (2) for connecting the management component (1) with the communicating devices;
• distribution means (3) adapted to acquire incoming data coming from each communicating device via the interface means (2) and to distribute it via the interface means (2) to the other communicating devices;
the communication management being **characterized in that** it also comprises :
• processor means (6) arranged to define at least one send group and at least one receive group, each constituted by communicating devices, and to control the distribution means in such a manner that the incoming data coming from a particular device referred to as the sender device belonging to the send group is distributed to the devices of the receive group with the exception of the send device, each communicating device of the send group in turn becoming the sender device in a first predefined sequence that is repeated cyclically.

2. A communication management component according to claim 1, wherein the distribution means are adapted so that the incoming data coming from a sender device are distributed to the communicating devices of the receive group during one or more successive send operations (Oe7, Oe8, Oe9) of predetermined duration, a send operation corresponding to distributing incoming data coming from the sender device to at least one of the communicating devices of the receive group.

3. A communication management component according to claim 2, wherein the send operations are performed in a second predefined sequence that is repeated cyclically.

4. A communication management component according to claim 2 or claim 3, wherein the distribution means are adapted so that the first send operation from a sender device begins at the end of the first send operation from the preceding sender device in the first sequence.

5. A communication management component according to any preceding claim, wherein the processor means are adapted so that the send group does not include at least one communicating device which is not adapted to generate data for other communicating devices via the management component and is therefore not included in the send group.

6. A communication management component according to any preceding claim, wherein the processor means are adapted so that the reception group does not include at least one communicating device which is not adapted to receive data coming from other communicating devices via the management component (1) and is therefore not included in the receive group.

7. A communication management component according to any preceding claim, wherein the distribution means are adapted so that the incoming data are acquired using a FIFO type method.

8. A communication management component according to any preceding claim, wherein the distribution means are adapted so that data is exchanged at a rate of the order of 100 Mbit/s.

9. A communication management component according to any preceding claim, wherein the distribution means (3) comprise a logic circuit (4) of FPGA or ASIC type.

10. A communication management method for organizing data exchanges between communicating devices of an Ethernet type network, the management method including an initial step during which at least one send group and at least one receive group are defined that are constituted by communicating devices, the method including distribution steps (Ed7, Ed8, Ed10) each associated with a particular device of the send group referred to as the sender device, during which incoming data coming from the sender device is distributed to the communicating devices of the receive group with the exception of the sender device, each of the communicating devices of the send group in turn becoming the sender device in a first predetermined sequence that is repeated cyclically.

11. A management method according to claim 10, during which each distribution step comprises one or more successive send operations (Oe7, Oe8, Oe9) of predetermined duration (T2), a send operation corresponding to distributing incoming data coming from the sender device to at least one communicating device of the receive group.

12. A management method according to claim 10 or claim 11, wherein the first send operation of a distribution step begins at the end of the first send operation of the preceding distribution step.

13. A management method according to any one of claims 10 to 12, wherein the predetermined duration (T2) is the same for each of the distribution steps associated with each device of the send group.

14. A management method according to any one of claims 10 to 12, wherein the predetermined duration (T2) differs for at least two distribution steps associated with two different devices of the send group, said predetermined duration being a multiple of a common unit time.
